# EUROPEAN PATENT APPLICATION

(11) **EP 4 489 208 A1**
(43) Date of publication of application: **08.01.2025**
(21) Application number: 22930194.0
(22) Date of filing: 07.03.2022
(51) Int. Cl.: H01M 50/50

(54) **INSULATING SHEET, BATTERY CELL, BATTERY AND ELECTRONIC DEVICE**

(71) Applicant: Ningde Amperex Technology Limited, Ningde, Fujian 352100 (CN)
(72) Inventor: YU, Jing, Ningde, Fujian 352100 (CN); WANG, Xinlei, Ningde, Fujian 352100 (CN)
(74) Representative: Icosa
(86) International application number: PCT/CN2022/079460
(87) International publication number: WO 2023/168545

(57) **Abstract**

This application discloses an insulating sheet, a battery cell, a battery, and an electronic device. The insulating sheet is used for a battery cell. The battery cell includes an electrode assembly, and the electrode assembly includes a first tab. The insulating sheet includes a first sheet body and a second sheet body. The first sheet body includes a first wall surface. The second sheet body is connected to the first sheet body, and the second sheet body includes a second wall surface facing the first wall surface. The first wall surface and the second wall surface jointly define a first gap, and the first gap has a first port and a second port distributed opposite each other. A direction from the first port to the second port is a first direction, and the first direction intersects with a direction perpendicular to the first wall surface. Since a current collector of the electrode assembly can be in contact with only a wall surface of the first sheet body facing away from the first wall surface and cannot be in contact with a part of the first tab located between the first sheet body and the second sheet body, it is difficult for the first tab to come into contact with a current collector with opposite polarity which otherwise leads to a short circuit, thereby improving the safety performance of the battery cell.

## Description

### TECHNICAL FIELD

Some embodiments of this application relate to the field of battery technologies, and in particular, to an insulating sheet, a battery cell, a battery, and an electronic apparatus.

### BACKGROUND

A battery cell is provided with an insulating sheet and an electrode assembly, and the insulating sheet can support a tab of the electrode assembly, facilitating the electrical connection between the tab and a pole. In existing batteries, a tab is prone to contact with a current collector with opposite polarity, resulting in a short circuit.

### SUMMARY

Some embodiments of this application provide an insulating sheet, a battery cell, a battery, and an electronic apparatus, so as to improve the safety of the battery cell.

To solve the above technical problem, a technical solution used in this application is to provide an insulating sheet used for a battery cell. The battery cell includes an electrode assembly, and the electrode assembly includes a first tab. The insulating sheet includes a first sheet body and a second sheet body, where the first sheet body includes a first wall surface, the second sheet body is configured to be connected to the first sheet body, the second sheet body includes a second wall surface facing the first wall surface, the first wall surface and the second wall surface jointly define a first gap, and the first gap has a first port and a second port distributed opposite each other. A direction from the first port to the second port is a first direction, the first direction intersects with a direction perpendicular to the first wall surface, and the insulating sheet is configured to allow the first tab to sequentially pass through the first port and the second port. In the above solution, since the first tab is clamped by the first sheet body and the second sheet body, a position of the first tab relative to the entire insulating sheet is relatively stable, and the first tab is not prone to movement relative to the insulating sheet to come into contact with a housing of the battery cell which otherwise leads to a short circuit. In addition, since a current collector of the electrode assembly can be in contact with only a wall surface of the first sheet body facing away from the first wall surface and cannot be in contact with a part of the first tab located between the first sheet body and the second sheet body, it is difficult for the first tab to come into contact with a current collector with opposite polarity which otherwise leads to a short circuit, thereby improving the safety performance of the battery cell. Moreover, since the current collector cannot be in contact with the part of the first tab located between the first sheet body and the second sheet body, tab adhesive on this part can be omitted, reducing material costs of the battery cell.

In some embodiments, at least one of the following conditions (a) to (d) is satisfied: (a) the first sheet body and the second sheet body are connected through hot melting; (b) the first sheet body and the second sheet body are connected through adhesion; (c) the insulating sheet includes a first connecting portion clamping the first sheet body and the second sheet body, the first connecting portion including a first part and a second part elastically connected to each other; where the first part abuts against a wall surface of the first sheet body facing away from the first wall surface, so that an elastic pushing force in a direction from the first sheet body to the second sheet body is generated against the first sheet body; and the second part abuts against a wall surface of the second sheet body facing away from the second wall surface, so that an elastic pushing force in a direction from the second sheet body to the first sheet body is generated against the second sheet body; or (d) the insulating portion includes a second connecting portion, where one end of the second connecting portion is fixedly connected to the first sheet body, and another end is fixedly connected to the second sheet body. In the above solution, the hot melting connection features simple operation without the need for additional components, and features low costs. An adhesion member may be provided between the first sheet body and the second sheet body, which can not only hide the part of the adhesion member without occupying too much space of the battery cell, but also keep a certain distance between the first sheet body and the second sheet body, facilitating the definition of the first gap. The connection through the first connecting portion features simple assembly, easy disassembling, and convenient maintenance. The connection through the second connecting portion is more reliable.

In some embodiments, in the first direction, the first sheet body includes a first side edge facing away from the first port, and the second sheet body includes a second side edge facing away from the first port, where the second side edge is located between the first side edge and the first port, and the second side edge and the first wall surface jointly define the second port. In the above solution, the first tab is not prone to movement along the first direction X beyond the first side edge of the first sheet body to come into contact with the housing of the battery cell, improving the safety of the battery cell.

In some embodiments, the first wall surface is provided with a protruding portion, where the protruding portion is disposed on a side of the second port facing away from the first port. In the above solution, the protruding portion can further reduce the probability of the first tab moving beyond the first side edge of the first sheet body and can also prevent a bent part of the first tab from coming into contact with the housing which otherwise leads to a short circuit, thereby improving the safety performance of the battery cell.

In some embodiments, in the first direction, the first sheet body includes a third side edge facing away from the second port, and the second sheet body includes a fourth side edge facing away from the second port. The third side edge and the fourth side edge jointly define the first port. In the above solution, the insulating sheet has simpler structure, allowing for more convenient assembly process of the first tab and the insulating sheet.

In some embodiments, the first sheet body is provided with a first through hole, where the first through hole penetrates the first sheet body along a thickness direction of the first sheet body, and the first through hole includes the first port. In the above solution, the first tab can be positioned by the surrounding hole wall of the first through hole, making the first tab less prone to displacement relative to the first sheet body, thereby enhancing a limiting effect on the first tab.

In some embodiments, in the first direction, the first sheet body includes a third side edge facing away from the second port, and the second sheet body includes a fourth side edge facing away from the second port. The insulating portion includes a third connecting portion, where one end of the third connecting portion is connected to the third side edge, and another end is connected to the fourth side edge. In the above solution, the third connecting portion does not occupy additional space in the direction perpendicular to the first wall surface, so the overall thickness of the insulating sheet is not increased, reducing the space occupied by the insulating sheet inside the battery cell, and increasing the energy density of the battery cell.

In some embodiments, the first sheet body, the second sheet body, and the third connecting portion are configured to be integrally formed from a sheet material, and the third connecting portion is bent to make the first wall surface face the second wall surface. The above solution not only allows for more reliable connection between the first sheet body and the second sheet body, but can also reduce the number of parts of the insulating sheet, simplifying the processing steps of the insulating sheet, and reducing the processing costs of the insulating sheet.

In some embodiments, the third connecting portion is provided with several second through holes arranged along a length direction of the third side edge, each second through hole communicating with the gap between the first wall surface and the second wall surface. In the above solution, provision of the second through holes makes the third connecting portion easier to be bent, reducing the difficulty of the bending process, and also reducing the possibility of cracks in the third connecting portion due to bending.

In some embodiments, the insulating sheet satisfies one of the following conditions (e) to (g):
(e) the first port is disposed on the third connecting portion; (f) the third connecting portion and the third side edge jointly define the first port; and (g) the third connecting portion, the third side edge, and the fourth side edge jointly define the first port. In the above solution, the amount of the material of the third connecting portion can be reduced, facilitating bending of the third connecting portion.

In some embodiments, the electrode assembly further includes a second tab, where the second tab has a polarity opposite to that of the first tab. The first wall surface and the second wall surface further define a second gap, where the second gap has a third port and a fourth port distributed opposite each other in the first direction, and the insulating sheet is configured to allow the second tab to sequentially pass through the third port and the fourth port. In the above solution, the insulating sheet can be assembled with both the first tab and the second tab, and the insulating sheet can reduce the probability of the second tab coming into contact with a current collector with opposite polarity which otherwise leads to a short circuit, thereby further improving the safety performance of the battery cell.

In some embodiments, the insulating sheet satisfies at least one of the following conditions (h) to (j): (h) the first gap communicates with the second gap; (i) the first port communicates with the third port; or (j) the second port communicates with the fourth port. In the above solution, the first gap, the second gap, the first port, the second port, the third port, and the fourth port feature simpler and more convenient processing, and low processing costs.

A second aspect of this application further provides a battery cell including the insulating sheet according to any one of the foregoing embodiments and the electrode assembly.

A third aspect of the this application further provides a battery including one or more battery cells according to any one of the foregoing embodiments.

A fourth aspect of the this application further provides an electronic apparatus including one or more battery cells according to any one of the foregoing embodiments.

The insulating sheet provided in this application allows the first tab to sequentially pass through the first port, the first gap, and the second port, and then bend to be attached to or apart from the wall surface of the second sheet body facing away from the second wall surface, thereby facilitating the electrical connection between the first tab and a pole. Since the first tab is clamped by the first sheet body and the second sheet body, a position of the first tab relative to the entire insulating sheet is relatively stable, and the first tab is not prone to movement relative to the insulating sheet to come into contact with a housing of the battery cell which otherwise leads to a short circuit. In addition, since a current collector of the electrode assembly can be in contact with only a wall surface of the first sheet body facing away from the first wall surface and cannot be in contact with a part of the first tab located between the first sheet body and the second sheet body, it is difficult for the first tab to come into contact with a current collector with opposite polarity which otherwise leads to a short circuit, thereby improving the safety performance of the battery cell. Moreover, since the current collector cannot be in contact with the part of the first tab located between the first sheet body and the second sheet body, tab adhesive on this part can be omitted, reducing material costs of the battery cell.

### BRIEF DESCRIPTION OF DRAWINGS

To describe the technical solutions of some embodiments of this application more clearly, the following briefly describes the accompanying drawings required for describing some embodiments of this application. Apparently, the accompanying drawings in the following description show merely some embodiments of this application, and persons of ordinary skill in the art may still derive other drawings from the accompanying drawings without creative efforts.
FIG. 1 is a schematic three-dimensional view of a combination of an insulating sheet and a first tab according to a first embodiment of this application;
FIG. 2 is a schematic cross-sectional view of the insulating sheet according to the first embodiment of this application;
FIG. 3 is a schematic three-dimensional view of an insulating sheet according to a second embodiment of this application;
FIG. 4 is a schematic partial three-dimensional diagram of a combination of an insulating sheet and a first tab according to a third embodiment of this application;
FIG. 5 is a schematic partial three-dimensional diagram of a combination of an insulating sheet and a first tab according to a fourth embodiment of this application;
FIG. 6 is a schematic three-dimensional view of an insulating sheet according to a fifth embodiment of this application;
FIG. 7 is a schematic cross-sectional view of the insulating sheet according to the fifth embodiment of this application;
FIG. 8 is a schematic three-dimensional view of an insulating sheet according to a sixth embodiment of this application;
FIG. 9 is a schematic three-dimensional view of an insulating sheet according to a seventh embodiment of this application;
FIG. 10 is a schematic three-dimensional view of a combination of the insulating sheet and a first tab and a second tab according to the seventh embodiment of this application;
FIG. 11 is a schematic three-dimensional view of a combination of the insulating sheet and a first tab and a second tab according to the seventh embodiment of this application;
FIG. 12 is a schematic side view of a combination of the insulating sheet and a first tab and a second tab according to the seventh embodiment of this application;
FIG. 13 is a schematic three-dimensional view of an insulating sheet according to an eighth embodiment of this application;
FIG. 14 is a schematic cross-sectional view of a combination of an insulating sheet and a first tab according to a ninth embodiment of this application; and
FIG. 15 is a schematic cross-sectional view of a battery cell according to the second embodiment of this application.

### DESCRIPTION OF EMBODIMENTS

For ease of understanding this application, the following further describes this application in detail with reference to the accompanying drawings and specific embodiments. It should be noted that when an element is "fixed to" another element, the element may be directly on the another element, or there may be one or more elements between the elements. When an element is "connected to" another element, the element may be directly connected to the another element, or there may be one or more elements between the elements. Terms such as "vertical", "horizontal", "left", "right", and similar expressions used in this specification are for illustration only.

Unless otherwise defined, all technical and scientific terms used in the specification shall have the same meanings as commonly understood by those skilled in the art to which this application pertains. The terms used in the specification of this application are for description of specific embodiments only without any intention to limit this application. The term "or/and" used in the specification includes any and all combinations of one or more associated items listed.

A battery cell includes a housing, an electrode assembly, an insulating sheet, and a pole. The housing defines an accommodating cavity, and the electrode assembly is disposed in the accommodating cavity. The poles penetrate the housing to be electrically connected to the electrode assembly, so as to output electrical energy of the battery cell. The electrode assembly includes two electrode plates with opposite polarities, namely a first electrode plate and a second electrode plate. The first electrode plate includes a first current collector and a first tab, and the second electrode plate includes a second current collector and a second tab. The first tab and the second tab separately bypass the insulating sheet and are supported by the wall surfaces of the insulating sheet facing away from the first current collector and the second current collector, so as to be electrically connected to the pole. In existing battery cells, the first tab and the second tab are prone to movement relative to the insulating sheet and contact with the housing, resulting in a short circuit; and the part of the first tab located on a side of the insulating sheet close to a wall surface of the second current collector is prone to contact with the second current collector, resulting in a short circuit.

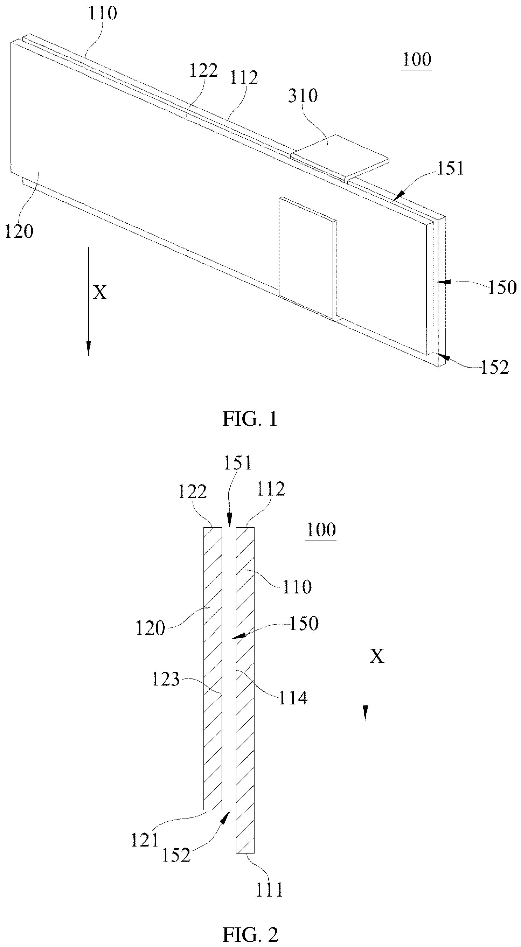

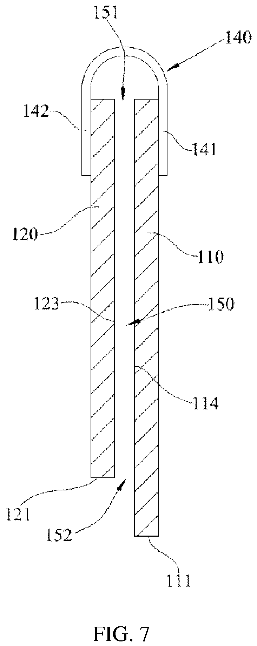

In view of this, referring to FIGs. 1 to 14, this application provides an insulating sheet 100 used for a battery cell 10. The insulating sheet 100 can improve the safety performance of the battery cell 10. Specifically, the battery cell 10 includes an electrode assembly 300, and the electrode assembly 300 includes a first tab 310 and a second tab 320 with opposite polarities.

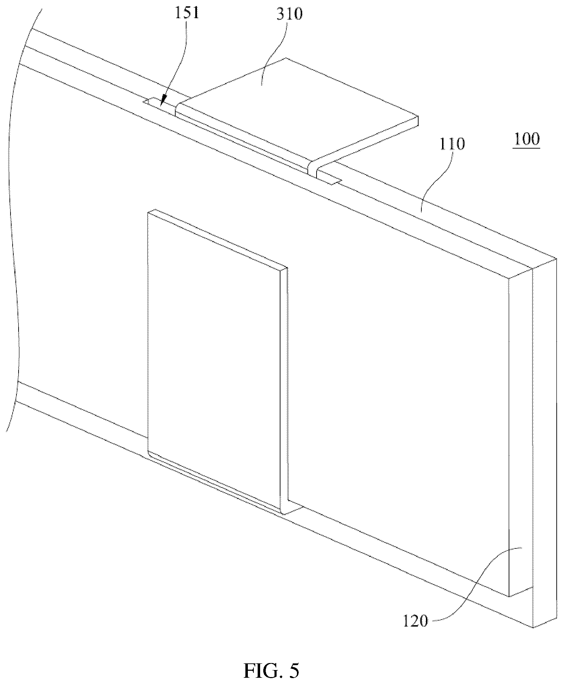

The insulating sheet 100 includes a first sheet body 110 and a second sheet body 120, and the first sheet body 110 includes a first wall surface 114. The second sheet body 120 is connected to the first sheet body 110, and the second sheet body 120 includes a second wall surface 123 facing the first wall surface 114. Referring to FIGs. 1 and 2, the first wall surface 114 may be apart from the first wall surface 114. Referring to FIG. 5, the first wall surface 114 and the second wall surface 123 may be partially in contact with and partially apart from each other. The first wall surface 114 and the second wall surface 123 may be planar walls, curved walls, or irregular walls.

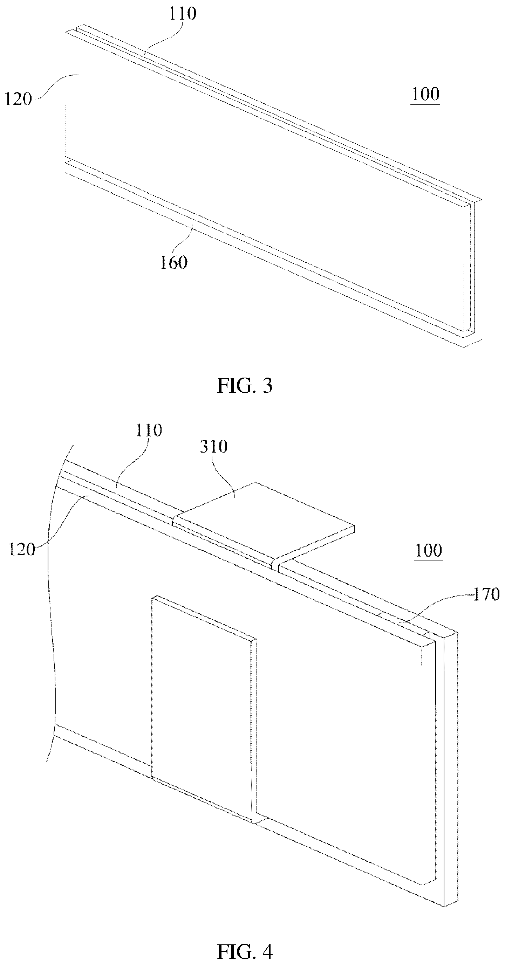

Referring to FIGs. 1 and 2, the first wall surface 114 and the second wall surface 123 jointly define a first gap 150, and the first gap 150 has a first port 151 and a second port 152 distributed opposite each other. In one embodiment, the first wall surface 114 and the second wall surface 123 may be apart from each other to define the first gap 150. Referring to FIG. 4, in another embodiment, the first wall surface 114 and the second wall surface 123 each has a recess, and the two recesses jointly form the first gap 150.

A direction from the first port 151 to the second port 152 is a first direction X, the first direction X intersects with a direction perpendicular to the first wall surface 114 (that is, the first direction X is not perpendicular to the first wall surface 114), and the insulating sheet 100 is configured to allow the first tab 310 to sequentially pass through the first port 151, the first gap 150, and the second port 152.

When the insulating sheet 100 is in use, the first sheet body 110 can be made to be located between the second sheet body 120 and the electrode assembly 300. The first tab 310 of the electrode assembly 300 extends out of the first gap 150 from the first port 151, then extends out from the second port 152, and bends to be attached to or apart from a wall surface of the second sheet body 120 facing away from the first sheet body 110, thereby facilitating the connection between the first tab 310 and a pole 400.

For the insulating sheet 100 of this application, in a first aspect, since the first tab 310 is clamped by the first sheet body 110 and the second sheet body 120, a position of the first tab 310 relative to the entire insulating sheet 100 is relatively stable, and the first tab 310 is not prone to movement relative to the insulating sheet 100 to come into contact with a housing 200 of the battery cell 10 which otherwise leads to a short circuit.

In a second aspect, since a current collector of the electrode assembly 300 can be in contact with only a wall surface of the first sheet body 110 facing away from the first wall surface 114 and cannot be in contact with a part of the first tab 310 located between the first sheet body 110 and the second sheet body 120, it is difficult for the first tab 310 to come into contact with a current collector with opposite polarity which otherwise leads to a short circuit, thereby improving the safety performance of the battery cell 10.

In a third aspect, since the current collector cannot be in contact with the part of the first tab 310 located between the first sheet body 110 and the second sheet body 120, tab adhesive on this part can be omitted, reducing material costs of the battery cell 10.

It should be noted that in this application, the first sheet body 110 and the second sheet body 120 may be connected before or during the assembly process with the first tab 310. The assembly manner of the first tab 310 and the insulating sheet 100 may vary depending on the connection manner of the first sheet body 110 and the second sheet body 120. For example, when the first sheet body 110 and the second sheet body 120 are connected to each other before the assembly with the first tab 310, the first tab 310 is assembled with the insulating sheet 100 by passing through the first gap 150. When the first sheet body 110 and the second sheet body 120 are connected to each other during the assembly process with the first tab 310, the first sheet body 110 and the second sheet body 120 can first clamp the first tab 310, and then the first sheet body 110 and the second sheet body 120 are connected, thereby completing the assembly of the insulating sheet 100 and the first tab 310. Compared with the assembly manner of making the first tab 310 pass through the first gap 150, this assembly manner features simpler and more convenient processing.

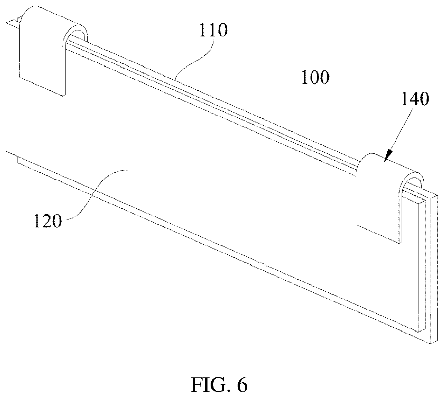

A specific connection manner of the first sheet body 110 and the second sheet body 120 is determined based on actual needs. For example, the connection manner of the first sheet body 110 and the second sheet body 120 may satisfy at least one of the following conditions (a) to (d).
(a) The first sheet body 110 and the second sheet body 120 are connected through hot melting. Positions for hot melting of the two are determined based on needs, specifically, outer peripheral edges of the two may be connected through hot melting. The hot melting connection features simple operation without the need for additional components, and features low costs.
(b) Referring to FIG. 4, the first sheet body 110 and the second sheet body 120 are connected through adhesion. Specifically, the insulating sheet 100 may further include an adhesion member 170, and the adhesion member 170 is configured to adhere the first sheet body 110 and the second sheet body 120. The adhesion manner and adhesion position of the adhesion member 170 are determined based on specific needs. In an embodiment, the adhesion member 170 may be disposed between the first sheet body 110 and the second sheet body 120, which can not only hide the part of the adhesion member 170 without occupying too much space of the battery cell 10, but also keep a certain distance between the first sheet body 110 and the second sheet body 120, facilitating the definition of the first gap 150.
(c) Referring to FIGs. 6 to 8, the insulating sheet 100 includes a first connecting portion 140 clamping the first sheet body 110 and the second sheet body 120, the first connecting portion 140 including a first part 141 and a second part 142 elastically connected to each other. The first part 141 abuts against a wall surface of the first sheet body 110 facing away from the first wall surface 114, so that an elastic pushing force in a direction from the first sheet body 110 to the second sheet body 120 is generated against the first sheet body 110. The second part 142 abuts against a wall surface of the second sheet body 120 facing away from the second wall surface 123, so that an elastic pushing force in a direction from the second sheet body 120 to the first sheet body 110 is generated against the second sheet body 120. The first connecting portion 140 connects the first sheet body 110 and the second sheet body 120 by clamping the first sheet body 110 and the second sheet body 120. This manner features simple assembly, easy disassembling, and convenient maintenance.
(d) The insulating portion includes a second connecting portion, where one end of the second connecting portion is fixedly connected to the first sheet body 110, and another end is fixedly connected to the second sheet body 120. A material of the second connecting portion may be the same as or different from material of the first sheet body 110 and the second sheet body 120. When the material of the second connecting portion is the same as the material of the first sheet body 110 and the second sheet body 120, the first sheet body 110, the second sheet body 120, and the second connecting portion can be integrally formed for connection.

Referring to FIG. 2, in the first direction X, the first sheet body 110 includes a first side edge 111 facing away from the first port 151, and the second sheet body 120 includes a second side edge 121 facing away from the first port 151, where the second side edge 121 is located between the first side edge 111 and the first port 151, and the second side edge 121 and the first wall surface 114 jointly define the second port 152. In other words, in this embodiment, in the first direction X, width of the first sheet body 110 is greater than width of the second sheet body 120, so that when the first tab 310 is bent to be attached to or apart from the wall surface of the second sheet body 120 facing away from the second wall surface 123, the first tab 310 is not prone to movement along the first direction X beyond the first side edge 111 of the first sheet body 110 to come into contact with the housing 200 of the battery cell 10, improving the safety of the battery cell 10.

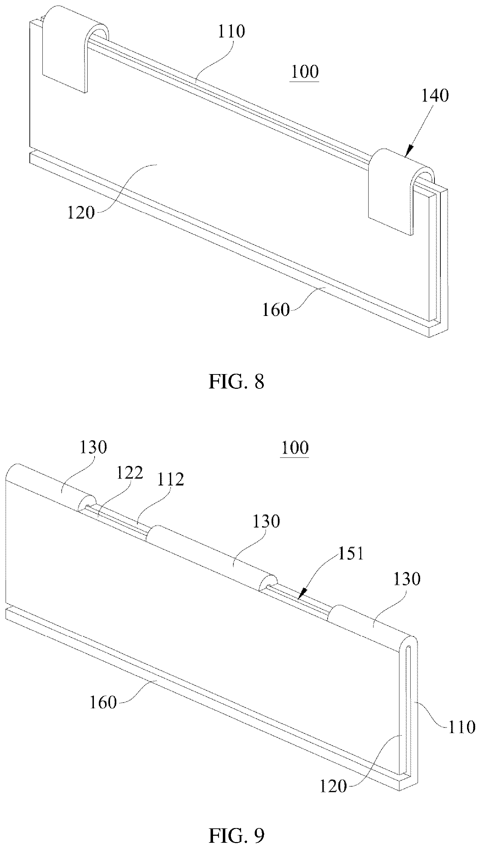

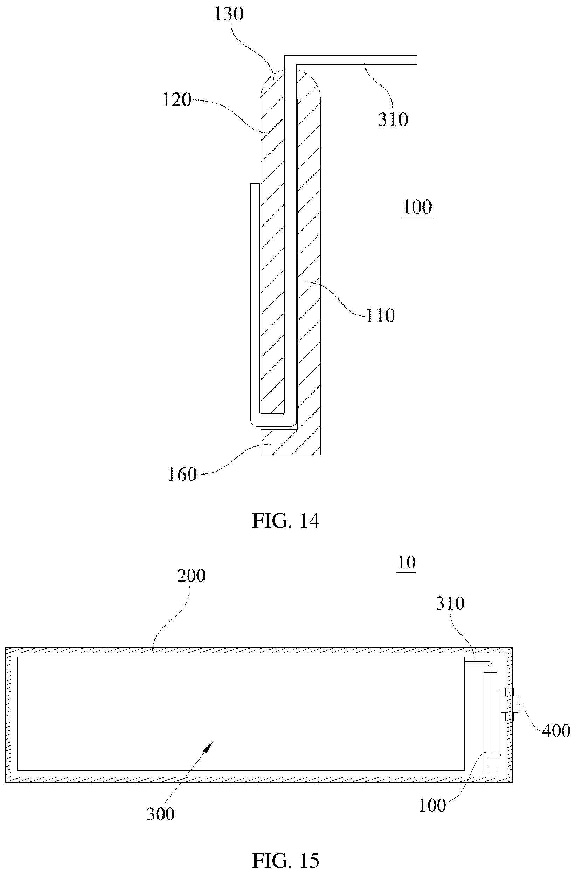

Referring to FIGs. 8 to 14, in some embodiments, the first wall surface 114 is provided with a protruding portion 160, where the protruding portion 160 is disposed on a side of the second port 152 facing away from the first port 151. The protruding portion 160 can limit the movement of the first tab 310 toward the first side edge 111, which can further reduce the probability of the first tab 310 moving beyond the first side edge 111 of the first sheet body 110, and can also prevent a bent part of the first tab 310 from coming into contact with a lower housing body (as shown in FIG. 15) of the housing 200 which otherwise leads to a short circuit, thereby improving the safety performance of the battery cell 10.

Referring to FIGs. 1 and 2, in some embodiments, in the first direction X, the first sheet body 110 includes a third side edge 112 facing away from the second port 152, and the second sheet body 120 includes a fourth side edge 122 facing away from the second port 152. The third side edge 112 and the fourth side edge 122 jointly define the first port 151. In the above solution, the first port 151 is obtained without additional holes provided in the first sheet body 110 and the second sheet body 120, and the first port 151 can be directly obtained through the gap between the third side edge 112 and the fourth side edge 122, featuring simpler structure and allowing for more convenient assembly process of the first tab 310 and the insulating sheet 100.

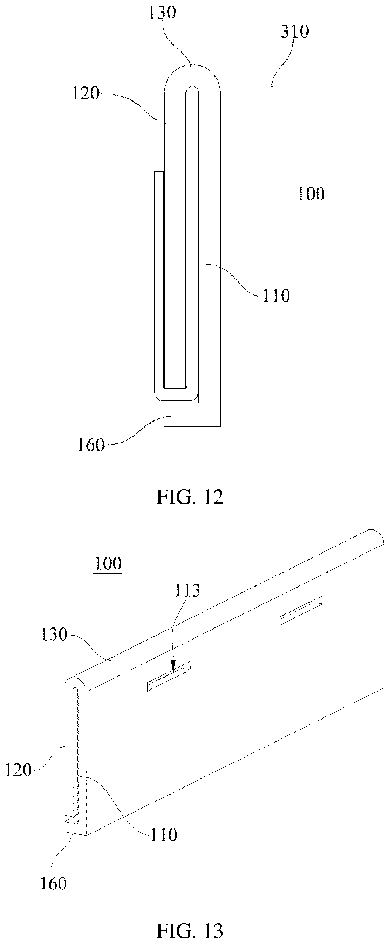

Referring to FIG. 12, in some embodiments, the first sheet body 110 is provided with a first through hole 113, where the first through hole 113 penetrates the first sheet body 110 along a thickness direction of the first sheet body 110, and the first through hole 113 includes the first port 151. In the above solution, the first port 151 is defined by providing a hole in the first sheet body 110, and the first tab 310 can be positioned by the surrounding hole wall of the first through hole 113, making the first tab 310 less prone to displacement relative to the first sheet body 110, thereby enhancing a limiting effect on the first tab 310.

Referring to FIGs. 9 to 14, in some embodiments, in the first direction X, the first sheet body 110 includes a third side edge 112 facing away from the second port 152, and the second sheet body 120 includes a fourth side edge 122 facing away from the second port 152. The insulating portion includes a third connecting portion 130, where one end of the third connecting portion 130 is connected to the third side edge 112, and another end is connected to the fourth side edge 122. In the above solution, the third connecting portion 130 does not occupy additional space in the direction perpendicular to the first wall surface 114, so the overall thickness of the insulating sheet 100 is not increased, reducing the space occupied by the insulating sheet 100 inside the battery cell 10, and increasing the energy density of the battery cell 10.

When the third connecting portion 130 is connected to the fourth side edge 122 and the fourth side edge 122, in an embodiment, the first sheet body 110, the second sheet body 120, and the third connecting portion 130 may be configured to be integrally formed from a sheet material, and the third connecting portion 130 is bent to make the first wall surface 114 face the second wall surface 123. In the above solution, the insulating sheet 100 can be processed from one part, which not only allows for more reliable connection between the first sheet body 110 and the second sheet body 120, but can also reduce the number of parts of the insulating sheet 100, simplifying the processing steps of the insulating sheet 100, and reducing the processing costs of the insulating sheet 100.

In addition, when the first sheet body 110, the second sheet body 120, and the third connecting portion 130 are configured to be integrally formed from a sheet material, the first protruding portion can be configured to be formed by the first sheet body 110 through stamping process. For example, stamping can be performed on the wall surface of the first sheet body 110 facing away from the first wall surface 114, so as to create a depression on the wall surface of the first sheet body 110 facing away from the first wall surface 114, and create a protrusion on the first wall surface 114 of the first sheet body 110, where the protrusion is the foregoing protruding portion 160.

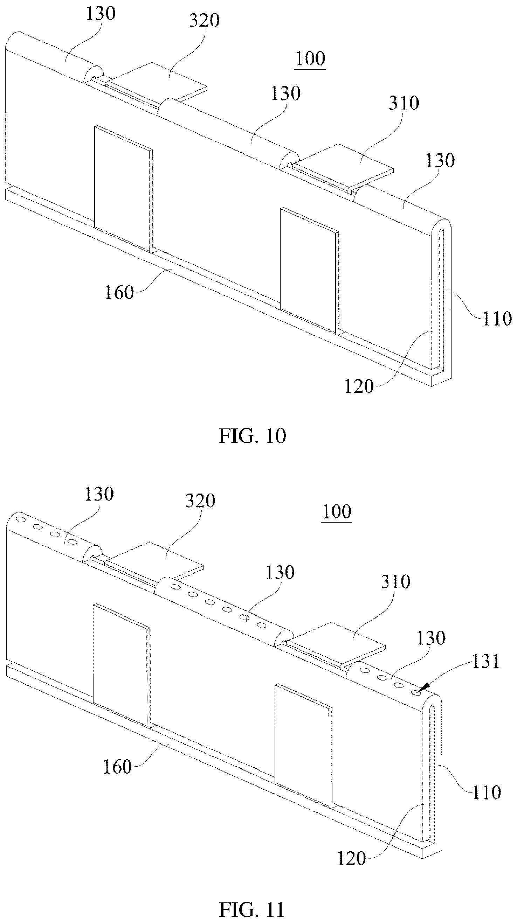

Referring to FIG. 11, in some embodiments, the third connecting portion 130 is provided with several second through holes 131 arranged along a length direction of the third side edge 112, each second through hole 131 communicating with the gap between the first wall surface 114 and the second wall surface 123. Provision of the second through holes 131 makes the third connecting portion 130 easier to be bent, reducing the difficulty of the bending process, and also reducing the possibility of cracks in the third connecting portion 130 due to bending. The number, shape, and size of the second through hole 131 are determined based on specific needs.

In some embodiments, to facilitate the bending of the third connecting portion 130, the third connecting portion 130 can be made thinner than the first sheet body 110 and the second sheet body 120. Specifically, the third connecting portion 130 can be provided with a groove parallel to a length direction of the first side edge 111. This groove can be formed through stamping process or obtained through milling process.

In some embodiments, the insulating sheet 100 satisfies one of the following conditions (e) to (g).

(e) Referring to FIG. 14, the first port 151 is disposed on the third connecting portion 130. In this way, the amount of the material of the third connecting portion 130 can be reduced, facilitating bending of the third connecting portion 130.

(f) The third connecting portion 130 and the third side edge 112 jointly define the first port 151. To be specific, the first port 151 is disposed at the junction between the third connecting portion 130 and the third side edge 112, which can also facilitate the bending of the third connecting portion 130 relative to the first sheet body 110.

(g) Referring to FIGs. 9 to 12, the third connecting portion 130, the third side edge 112, and the fourth side edge 122 jointly define the first port 151. In this way, the amount of the material of the third connecting portion 130 can be reduced, facilitating bending of the third connecting portion 130.

One insulating sheet 100 may be assembled with only the first tab 310 but not with the second tab 320. For example, in an embodiment, two insulating sheets 100 may be provided, where one insulating sheet 100 is assembled with the first tab 310, and the other insulating sheet 100 is assembled with the second tab 320.

In some embodiments, the first wall surface 114 and the second wall surface 123 further define a second gap, where the second gap has a third port and a fourth port distributed opposite each other in the first direction X, and the insulating sheet 100 is configured to allow the second tab 320 to sequentially pass through the third port and the fourth port. In this way, the insulating sheet 100 can be assembled with both the first tab 310 and the second tab 320, and the insulating sheet 100 can reduce the probability of the second tab 320 coming into contact with a current collector with opposite polarity which otherwise leads to a short circuit, thereby further improving the safety performance of the battery cell 10.

In some embodiments, the insulating sheet 100 satisfies at least one of the following conditions (h) to (j):
(h) the first gap 150 communicates with the second gap;
(i) the first port 151 communicates with the third port; or
(j) the second port 152 communicates with the fourth port.

In a specific embodiment, referring to FIG. 1, in an embodiment, the first wall surface 114 of the first sheet body 110 and the second wall surface 123 can be apart from each other, so that the first gap 150 communicates with the second gap, the first port 151 communicates with the third port, and the second port 152 communicates with the fourth port. The first tab 310 and the second tab 320 can both pass through the gap between the first wall surface 114 and the second wall surface 123. In this solution, the first gap 150, the second gap, the first port 151, the second port 152, the third port, and the fourth port feature simpler and more convenient processing, and low processing costs.

Referring to FIG. 15, a second aspect of this application further provides a battery cell 10, where the battery cell 10 includes the insulating sheet 100 according to any one of the foregoing embodiments and the electrode assembly 300. The battery cell 10 further includes a housing 200 and a pole 400. The electrode assembly 300 is disposed in the housing 200, and the pole 400 penetrates the housing 200. An end of the pole 400 inside the housing 200 is electrically connected to the electrode assembly 300, and an end of the pole 400 outside the housing 200 is used to output the electrical energy of the battery cell 10.

A third aspect of the this application further provides a battery, where the battery includes one or more battery cells 10 described above.

A fourth aspect of the this application further provides an electronic apparatus, where the electronic apparatus includes one or more battery cells 10 described above.

It should be noted that although this specification and the accompanying drawings of this application provide preferable embodiments of this application, this application can be implemented in many different forms, and is not limited to the embodiments described in this specification. These embodiments should not be construed as additional limitations on the content of this application, and these embodiments are provided for ease of a more thorough and comprehensive understanding of the disclosed content of this application. In addition, the foregoing technical features are further mutually combined to form various embodiments not listed above, and these embodiments are all construed as falling within the scope recorded in this specification of this application; and further, persons of ordinary skill in the art can make improvements or changes based on the foregoing descriptions, and all these improvements and changes shall fall within the protection scope of the appended claims of this application.

## Claims

1. An insulating sheet, used for a battery cell, the battery cell comprising an electrode assembly and the electrode assembly comprising a first tab, wherein the insulating sheet comprises:
a first sheet body, comprising a first wall surface; and
a second sheet body, configured to be connected to the first sheet body, wherein the second sheet body comprises a second wall surface facing the first wall surface, the first wall surface and the second wall surface jointly define a first gap, and the first gap has a first port and a second port distributed opposite each other;
wherein a direction from the first port to the second port is a first direction, the first direction intersects with a direction perpendicular to the first wall surface, and the insulating sheet is configured to allow the first tab to sequentially pass through the first port and the second port.

2. The insulating sheet according to claim 1, satisfying at least one of the following conditions (a) to (d):
(a) the first sheet body and the second sheet body are connected through hot melting;
(b) the first sheet body and the second sheet body are connected through adhesion;
(c) the insulating sheet comprises a first connecting portion clamping the first sheet body and the second sheet body, the first connecting portion comprising a first part and a second part elastically connected to each other; wherein the first part abuts against a wall surface of the first sheet body facing away from the first wall surface, so that an elastic pushing force in a direction from the first sheet body to the second sheet body is generated against the first sheet body; and the second part abuts against a wall surface of the second sheet body facing away from the second wall surface, so that an elastic pushing force in a direction from the second sheet body to the first sheet body is generated against the second sheet body; or
(d) the insulating portion comprises a second connecting portion, wherein one end of the second connecting portion is fixedly connected to the first sheet body, and another end is fixedly connected to the second sheet body.

3. The insulating sheet according to claim 1, wherein
in the first direction, the first sheet body comprises a first side edge facing away from the first port, and the second sheet body comprises a second side edge facing away from the first port, wherein the second side edge is located between the first side edge and the first port, and the second side edge and the first wall surface jointly define the second port.

4. The insulating sheet according to claim 3, wherein
the first wall surface is provided with a protruding portion, wherein the protruding portion is disposed on a side of the second port facing away from the first port.

5. The insulating sheet according to claim 1, wherein
in the first direction, the first sheet body comprises a third side edge facing away from the second port, and the second sheet body comprises a fourth side edge facing away from the second port; wherein
the third side edge and the fourth side edge jointly define the first port.

6. The insulating sheet according to claim 1, wherein
the first sheet body is provided with a first through hole, wherein the first through hole penetrates the first sheet body along a thickness direction of the first sheet body, and the first through hole comprises the first port.

7. The insulating sheet according to claim 1, wherein
in the first direction, the first sheet body comprises a third side edge facing away from the second port, and the second sheet body comprises a fourth side edge facing away from the second port; wherein
the insulating portion comprises a third connecting portion, wherein one end of the third connecting portion is connected to the third side edge, and another end is connected to the fourth side edge.

8. The insulating sheet according to claim 7, wherein
the first sheet body, the second sheet body, and the third connecting portion are configured to be integrally formed from a sheet material, and the connecting portion is bent to make the first wall surface face the second wall surface.

9. The insulating sheet according to claim 8, wherein
the third connecting portion is provided with several second through holes arranged along a length direction of the third side edge, each second through hole communicating with the gap between the first wall surface and the second wall surface.

10. The insulating sheet according to claim 7, satisfying one of the following conditions (e) to (g):
(e) the first port is disposed on the third connecting portion;
(f) the third connecting portion and the third side edge j ointly define the first port; and
(g) the third connecting portion, the third side edge, and the fourth side edge jointly define the first port.

11. The insulating sheet according to claim 1, wherein
the electrode assembly further comprises a second tab, wherein the second tab has a polarity opposite to that of the first tab; and
the first wall surface and the second wall surface further define a second gap, wherein the second gap has a third port and a fourth port distributed opposite each other in the first direction, and the insulating sheet is configured to allow the second tab to sequentially pass through the third port and the fourth port.

12. The insulating sheet according to claim 11, satisfying at least one of the following conditions (h) to (j):
(h) the first gap communicates with the second gap;
(i) the first port communicates with the third port; or
(j) the second port communicates with the fourth port.

13. A battery cell, comprising:
the insulating sheet according to any one of claims 1 to 12; and
the electrode assembly.

14. A battery, comprising one or more battery cells according to claim 13.

15. An electronic apparatus, comprising one or more battery cells according to claim 13.
